# EUROPÄISCHE PATENTSCHRIFT

(11) **EP 0 761 464 B1**
(45) Veröffentlichungstag und Bekanntmachung des Hinweises auf die Patenterteilung: **12.07.2000**
(21) Anmeldenummer: 96113728.8
(22) Anmeldetag: 28.08.1996
(51) Int. Cl.: B41M 5/38

(54) **Thermischer Transfer von Farbstoffmischungen, enthaltend Azamethinfarbstoffe**
Thermal transfer of dye mixtures comprising azamethine dyes
Transfert thermique de mélanges de colorants comportant des colorants azaméthiniques

(30) Priorität: 07.09.1995 DE 19533024
(43) Veröffentlichungstag der Anmeldung: 12.03.1997
(73) Patentinhaber: BASF AKTIENGESELLSCHAFT, 67056 Ludwigshafen (DE)
(72) Erfinder: Etzbach, Karl-Heinz, Dr., 67227 Frankenthal (DE); Sens, Rüdiger, Dr., 68165 Mannheim (DE)

(56) Entgegenhaltungen:
- EP-A- 0 209 991
- EP-A- 0 416 434
- EP-A- 0 569 784
- WO-A-95/22581
- WO-A-96/11987

## Beschreibung

Die vorliegende Erfindung betrifft ein neues Verfahren zur thermischen Übertragung von Farbstoffmischungen, enthaltend Azamethinfarbstoffe auf Pyridon- oder Triazolopyridonbasis.

Beim Thermotransferdruckverfahren wird ein Transferblatt, das einen thermisch transferierbaren Farbstoff in einem oder mehreren Bindemitteln, gegebenenfalls zusammen mit geeigneten Hilfsmitteln, auf einem Träger enthält, mit einer Energiequelle, z.B. mit einem Heizkopf oder einem Laser, durch kurze Heizimpulse (Dauer: Bruchteile einer Sekunde) von der Rückseite her erhitzt, wodurch der Farbstoff aus dem Transferblatt migriert und in die Oberflächenbeschichtung eines Aufnahmemediums hineindiffundiert. Der wesentliche Vorteil dieses Verfahrens besteht darin, daß die Steuerung der zu übertragenden Farbstoffmenge durch Einstellung der von der Energiequelle abzugebenden Energie leicht möglich ist.

Allgemein wird die Farbaufzeichnung unter Verwendung der drei subtraktiven Grundfarben Gelb, Magenta, Cyan (und gegebenenfalls Schwarz) durchgeführt.

Aus der EP-A-569 784 sind Farbstoffmischungen aus Pyridon-/Triazolopyridonfarbstoffen und Anthrachinonfarbstoffen sowie deren thermischer Transfer bekannt.

Aufgabe der vorliegenden Erfindung war es, ein neues Thermotransferdruck-Verfahren bereitzustellen, bei dem spezielle Farbstoffmischungen, enthaltend Azamethinfarbstoffe auf Pyridon- oder Triazolopyridonbasis, mit vorteilhaften anwendungstechnischen Eigenschaften auf das Substrat übertragen werden.

Es wurde nun gefunden, daß die Übertragung von Farbstoffmischungen von einem Träger auf ein mit Kunststoff beschichtetes Papier durch Diffusion oder Sublimation mit Hilfe einer Energiequelle vorteilhaft gelingt, wenn man einen Träger verwendet, auf dem sich eine Farbstoffmischung befindet, enthaltend mindestens einen Pyridinfarbstoff der Formel Ia, Ib oder Ic 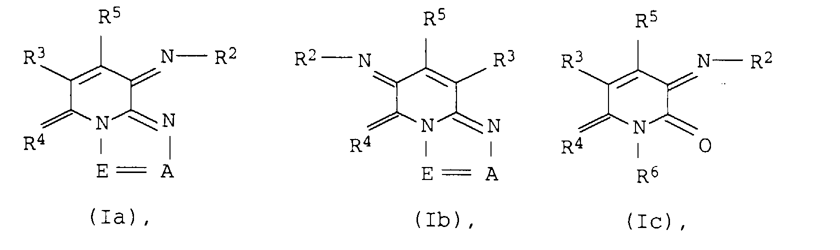 worin
einer der beiden Reste A oder E Stickstoff und der andere
einen Rest der Formel C-R¹, in der R¹ für C₁-C₂₀-Alkyl, das gegebenenfalls substituiert ist und durch ein bis vier Sauerstoffatome in Etherfunktion unterbrochen sein kann, gegebenenfalls substituiertes Phenyl oder Hydroxy steht,
- R²: einen Rest der Formeln IVa bis IVh 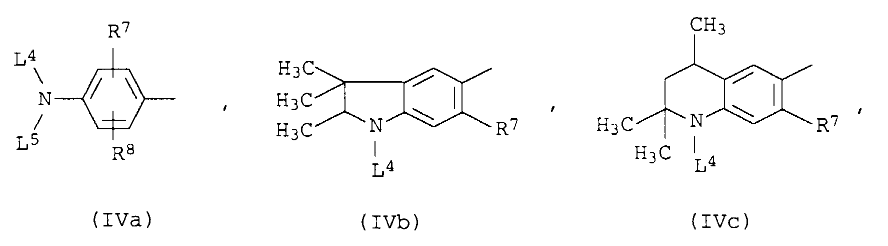 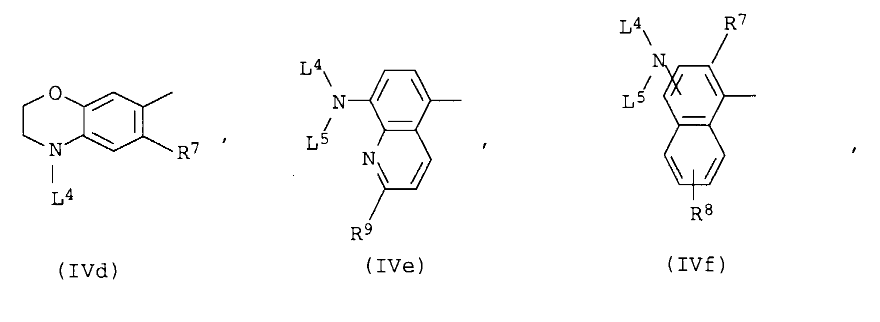 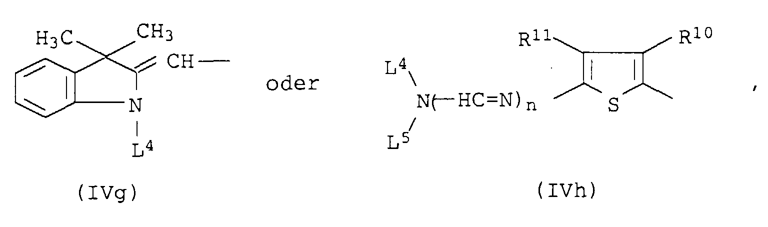
worin
- n: 0 oder 1,
- R⁷: für Wasserstoff, C₁-C₈-Alkyl, das gegebenenfalls durch ein oder zwei Sauerstoffatome in Etherfunktion unterbrochen ist, Hydroxy, C₁-C₄-Alkoxy, das durch Hydroxy substituiert sein kann, insbesondere Methoxy oder Ethoxy, Formylamino, C₁-C₄-Alkylsulfonylamino, C₁-C₄-Mono- oder Dialkylaminosulfonylamino oder den Rest -NHCONHQ, -NHCOQ oder -NHCO₂Q, wobei Q die Bedeutung von Phenyl, Benzyl, C₁-C₄-Alkylphenyl oder C₁-C₈-Alkyl, das gegebenenfalls durch ein oder zwei Sauerstoffatome in Etherfunktion unterbrochen ist, besitzt,
- R⁸: für Wasserstoff, C₁-C₄-Alkyl, insbesondere Methyl, oder C₁-C₄-Alkoxy, insbesondere Methoxy oder Ethoxy,
- L⁴ und L⁵: unabhängig voneinander jeweils für Wasserstoff, C₁-C₈-Alkyl, das gegebenenfalls substituiert ist und durch ein oder zwei Sauerstoffatome in Etherfunktion unterbrochen sein kann, C₃-C₄-Alkenyl, C₅-C₇-Cycloalkyl, gegebenenfalls substituiertes Phenyl oder zusammen mit dem sie verbindenden Stickstoffatom für einen fünf- oder sechsgliedrigen gesättigten heterocyclischen Rest, der gegebenenfalls weitere Heteroatome enthält,
- R⁹: für Wasserstoff oder C₁-C₄-Alkyl, insbesondere Methyl,
- R¹⁰: für Wasserstoff, Halogen, C₁-C₈-Alkyl, gegebenenfalls substituiertes Phenyl, gegebenenfalls substituiertes Benzyl, Cyclohexyl, Thienyl, Hydroxy, C₁-C₄-Alkoxy, C₁-C₄-Alkylthio oder C₁-C₈-Monoalkylamino und
- R¹¹: für Cyano, Carbamoyl, C₁-C₈-Mono- oder Dialkylcarbamoyl, C₁-C₈-Alkoxycarbonyl oder gegebenenfalls substituiertes Phenyl stehen,
- R³: Cyano, Carbamoyl, Carboxyl oder C₁-C₄-Alkoxycarbonyl,
- R⁴: Sauerstoff oder einen Rest der Formel C(CN)₂, C(CN)COOL¹ oder C(COOL¹)₂, wobei L¹ jeweils für C₁-C₈-Alkyl, das gegebenenfalls durch ein oder zwei Sauerstoffatome in Etherfunktion unterbrochen ist, oder Phenyl steht,
- R⁵: Wasserstoff, C₁-C₈-Alkyl, das gegebenenfalls substituiert ist und durch ein oder zwei Sauerstoffatome in Etherfunktion unterbrochen sein kann, oder gegebenenfalls substituiertes Phenyl und
- R⁶: C₁-C₂₀-Alkyl, das gegebenenfalls substituiert ist und durch ein bis vier Sauerstoffatome in Etherfunktion unterbrochen sein kann, gegebenenfalls substituiertes Phenyl, Hydroxy oder einen Rest der Formel NL²L³, wobei L² und L³ unabhängig voneinander jeweils für Wasserstoff, gegebenenfalls substituiertes C₁-C₁₂-Alkyl, C₅-C₇-Cycloalkyl, gegebenenfalls substituiertes Phenyl, gegebenenfalls substituiertes Pyridyl, gegebenenfalls substituiertes C₁-C₁₂-Alkanoyl, C₁-C₁₂-Alkoxycarbonyl, gegebenenfalls substituiertes C₁-C₁₂-Alkylsulfonyl, C₅-C₇-Cycloalkylsulfonyl, gegebenenfalls substituiertes Phenylsulfonyl, gegebenenfalls substituiertes Pyridylsulfonyl, gegebenenfalls substituiertes Benzoyl, Pyridylcarbonyl oder Thienylcarbonyl oder L² und L³ zusammen mit dem sie verbindenden Stickstoffatom gegebenenfalls durch C₁-C₄-Alkyl substituiertes Succinimido, gegebenenfalls durch C₁-C₄-Alkyl substituiertes Phthalimido oder einen fünf- oder sechsgliedrigen gesättigten heterocyclischen Rest, der gegebenenfalls weitere Heteroatome enthält, stehen, bedeuten,
sowie mindestens einen Farbstoff der Formel 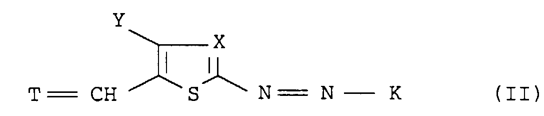 oder 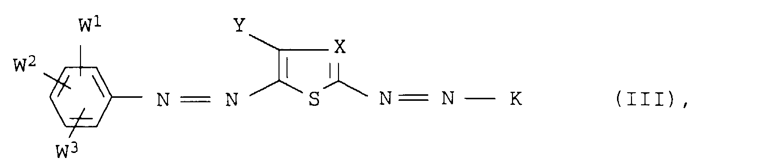 worin
- T: Sauerstoff oder den Rest einer CH-aciden Verbindung H₂T,
- Y: Wasserstoff, Halogen, gegebenenfalls substituiertes C₁-C₈-Alkyl, das durch ein oder zwei Sauerstoffatome in Etherfunktion unterbrochen sein kann, gegebenenfalls substituiertes Phenyl, gegebenenfalls substituiertes Thienyl oder gegebenenfalls substituiertes Pyridyl,
- X: Stickstoff oder einen Rest der Formel C-CN, C-CO-L¹, C-CO-N(L¹)₂ oder C-CO-OL¹, worin L¹ jeweils die obengenannte Bedeutung besitzt,
- K: den Rest einer Kupplungskomponente aus der Anilin- oder Thiazolreihe,
- W¹: Wasserstoff, Cyano, Nitro oder einen Rest der Formel CO-L¹, SO₂-L¹, CO-N(L¹)₂^{,} SO₂-N(L¹)₂, CO-OL¹ oder SO₂-OL¹, worin L¹ jeweils die obengenannte Bedeutung besitzt, und
- W²: und W³ unabhängig voneinander jeweils Wasserstoff, Halogen, Trifluormethyl, C₁-C₄-Alkyl, C₁-C₄-Alkoxy oder einen Rest der Formel N(L¹)₂, worin L¹ die obengenannte Bedeutung besitzt, bedeuten.

Die Farbstoffe der Formel Ia oder Ib können in mehreren tautomeren Formen auftreten, die alle von den Patentansprüchen umfaßt werden. Beispielsweise können die Verbindungen der Formel Ia mit R⁴ = Sauerstoff und R⁵ = Methyl u.a. in folgenden tautomeren Formen auftreten: 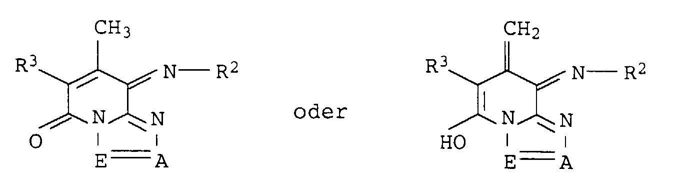 Wichtige Reste K sind z.B. solche der obengenannten Formel IVa.

Wenn in den obengenannten Formeln substituierte Alkylreste auftreten, so können als Substituenten, sofern nicht anders vermerkt, z.B. gegebenenfalls substituiertes Phenyl, C₁-C₈-Alkanoyloxy, C₁-C₈-Alkylaminocarbonyloxy, C₁-C₂₀-Alkoxycarbonyl, C₁-C₂₀-Alkoxycarbonyloxy, wobei die Alkylkette der beiden letztgenannten Reste gegebenenfalls durch ein oder vier Sauerstoffatome in Etherfunktion unterbrochen und/oder durch Phenyl oder Phenoxy substituiert ist, Halogen, Hydroxy oder Cyano in Betracht kommen. Die Alkylreste weisen dabei in der Regel ein bis drei, vorzugsweise ein oder zwei Substituenten auf.

Wenn in den obengenannten Formeln Alkylreste auftreten, die durch Sauerstoffatome in Etherfunktion unterbrochen sind, so sind solche Alkylreste bevorzugt, die durch ein oder zwei Sauerstoffatome in Etherfunktion unterbrochen sind.

Wenn in den obengenannten Formeln substituierte Phenyl-, Thienyl- oder Pyridylreste auftreten, so können als Substituenten, sofern nicht anders vermerkt, z.B. C₁-C₈-Alkyl, C₁-C₈-Alkoxy, C₁-C₄-Alkanoyloxy, Halogen, dabei insbesondere Chlor oder Brom, oder Carboxyl in Betracht kommen. Die Phenyl-, Thienyl- oder Pyridylreste weisen dabei in der Regel ein bis drei Substituenten auf.

Alle in den obengenannten Formeln auftretenden Alkylreste können sowohl geradkettig als auch verzweigt sein.

Geeignete Reste L¹, L², L³, L⁴, L⁵, Q, R¹, R⁵, R⁶, R⁷, R⁸, R⁹, R¹⁰, W², W³ und Y sind z.B. Methyl, Ethyl, Propyl, Isopropyl, Butyl, Isobutyl, sec-Butyl oder tert-Butyl.

Reste L¹, L², L³, L⁴, L⁵, Q, R¹, R⁵, R⁶, R⁷, R¹⁰ und Y sind weiterhin z.B. Pentyl, Isopentyl, Neopentyl, tert-Pentyl, Hexyl, 2-Methylpentyl, Heptyl, 1-Ethylpentyl, Octyl, 2-Ethylhexyl oder Isooctyl.

Reste L², L³, R¹ und R⁶ sind weiterhin z.B. Nonyl, Isononyl, Decyl, Isodecyl, Undecyl oder Dodecyl.

Reste R¹ und R⁶ sind weiterhin z.B. Tridecyl, Isotridecyl, Tetradecyl, Pentadecyl, Hexadecyl, Heptadecyl, Octadecyl, Nonadecyl oder Eicosyl. (Die obigen Bezeichnungen Isooctyl, Isononyl, Isodecyl und Isotridecyl sind Trivialbezeichnungen und stammen von den nach der Oxosynthese erhaltenen Alkoholen - vgl. dazu Ullmann's Encyclopedia of Industrial Chemistry, 5th Edition, Vol. A 1, Seiten 290 bis 293, sowie Vol. A 10, Seiten 284 und 285).

Reste L¹, L⁴, L⁵, Q, R¹, R⁵ und R⁶ sind weiterhin z.B. 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 2- oder 4-Butoxybutyl oder 4,8-Dioxadecyl.

Reste R¹ und R⁶ sind weiterhin z.B. 3,6,9-Trioxadecyl, 3,6,9-Trioxaundecyl, 3,6,9-Trioxadodecyl, 3,6,9,12-Tetraoxatridecyl, 3,6,9,12-Tetraoxatetradecyl, 11-Oxahexadecyl, 13-Butyl-11-oxaheptadecyl oder 4,11-Dioxapentadecyl.

Reste R³, R¹¹, L² und L³ sind z.B. Methoxycarbonyl, Ethoxycarbonyl, Propoxycarbonyl, Isopropoxycarbonyl, Butoxycarbonyl, Isobutoxycarbonyl oder sec-Butoxycarbonyl.

Reste R¹¹ sind weiterhin z.B. Mono- oder Dimethylcarbamoyl, Mono- oder Diethylcarbamoyl, Mono- oder Dipropylcarbamoyl, Mono- oder Diisopropylcarbamoyl, Mono- oder Dibutylcarbamoyl oder N-Methyl-N-butylcarbamoyl.

Reste Q¹, R⁷, R⁸, R¹⁰, W² und W³ sind weiterhin z.B. Methoxy, Ethoxy, Propoxy, Isopropoxy, Butoxy, Isobutoxy oder sec-Butoxy.

Reste R¹⁰ sind weiterhin z.B. Methylthio, Ethylthio, Propylthio, Isopropylthio, Butylthio, Isobutylthio oder sec-Butylthio.

Reste L², L⁴, L⁵, R¹, R⁵, R⁶, R¹⁰ und Y sind weiterhin z.B. Phenyl, 2-, 3- oder 4-Methylphenyl, 2-, 3- oder 4-Ethylphenyl, 2-, 3- oder 4-Propylphenyl, 2-, 3- oder 4-Isopropylphenyl, 2-, 3- oder 4-Butylphenyl, 2,4-Dimethylphenyl, 2-, 3- oder 4-Methoxyphenyl, 2-, 3- oder 4-Ethoxyphenyl, 2-, 3- oder 4-Isobutoxyphenyl, 2,4-Dimethoxyphenyl, 2-, 3- oder 4-Formyloxyphenyl, 2-, 3- oder 4-Acetyloxyphenyl, 2-, 3- oder 4-Propionyloxyphenyl, 2-, 3- oder 4-Chlorphenyl oder 2-, 3- oder 4-Carboxyphenyl.

Reste L², L⁴, L⁵, R¹, R⁵, R⁶ und Y sind weiterhin z.B. 2-Chlorethyl, 2- oder 3-Chlorpropyl, Benzyl, 1- oder 2-Phenylethyl, 3-Benzyloxypropyl, Phenoxymethyl, 6-Phenoxy-4-oxahexyl, 8-Phenoxy-4-oxahexyl, 2-Hydroxyethyl, 2- oder 3-Hydroxypropyl, 2-Cyanoethyl, 2- oder 3-Cyanopropyl, 2-Acetyloxyethyl, 2- oder 3-Acetyloxypropyl, 2-Isobutyryloxyethyl, 2- oder 3-Isobutyryloxypropyl, 2-Methoxycarbonylethyl, 2- oder 3-Methoxycarbonylpropyl, 2-Ethoxycarbonylethyl, 2- oder 3-Ethoxycarbonylpropyl, 2-Methoxycarbonyloxyethyl, 2- oder 3-Methoxycarbonyloxypropyl, 2-Ethoxycarbonyloxyethyl, 2- oder 3-Ethoxycarbonyloxypropyl, 2-Butoxycarbonyloxyethyl, 2- oder 3-Butoxycarbonyloxypropyl, 2-(2-Phenylethoxycarbonyloxy)ethyl, 2- oder 3-(2-Pehenylethoxycarbonyloxy)propyl, 2-(2-Ethoxyethoxycarbonyloxy)ethyl oder 2- oder 3-(2-Ethoxyethoxycarbonyloxy)propyl.

Reste L² und L³ sind weiterhin z.B. Formyl, Acetyl, Propionyl, Butyryl, Isobutyryl, Pentanoyl, Hexanoyl, Heptanoyl, Octanoyl, 2-Ethylhexanoyl, Methylsulfonyl, Ethylsulfonyl, Propylsulfonyl, Isopropylsulfonyl, Butylsulfonyl, Cyclopentylsulfonyl, Cyclohexylsulfonyl, Cycloheptylsulfonyl, Phenylsulfonyl, Tolylsulfonyl, Pyridylsulfonyl, Benzoyl, 2-, 3- oder 4-Methylbenzoyl, 2-, 3-oder 4-Methoxybenzoyl, Thien-2-ylcarbonyl oder Thien-3-yl-carbonyl.

Reste L², L³ und Y sind weiterhin z.B. Pyridyl, 2-, 3- oder 4-Methylpyridyl oder 2-, 3- oder 4-Methoxypyridyl.

Reste L², L³, L⁴ und L⁵ sind weiterhin z.B. Cyclopentyl, Cyclohexyl, Cycloheptyl, Methylcyclopentyl oder Methylcyclohexyl.

Reste R1⁰, W², W³ und Y sind weiterhin z.B. Fluor, Chlor oder Brom.

Reste Y sind weiterhin z.B. 2- oder 3-Methylthienyl.

Reste R⁷ sind z.B. Methylsulfonylamino, Ethylsulfonylamino, Propylsulfonylamino, Isopropylsulfonylamino, Butylsulfonylamino, Mono- oder Dimethylaminosulfonylamino, Mono- oder Diethylaminosulfonylamino, Mono- oder Dipropylaminosulfonylamino, Mono- oder Diisopropylaminosulfonylamino, Mono- oder Dibutylaminosulfonylamino, (N-Methyl-N-ethylaminosulfonyl)amino, 2-Hydroxyethoxy, 2-oder 3-Hydroxypropoxy oder 2- oder 4-Hydroxybutoxy.

Reste R¹⁰ sind weiterhin z.B. Benzyl, 2-Methylbenzyl, 2,4-Dimethylbenzyl, 2-Methoxybenzyl, 2,4-Dimethoxybenzyl, Methylamino, Ethylamino, Propylamino, Isopropylamino, Butylamino, Pentylamino, Hexylamino, Heptylamino, Octylamino oder 2-Ethylhexylamino.

Wenn der Rest T in Formel II sich von einer CH-aciden Verbindung H₂T ableitet, können als CH-acide Verbindungen H₂T z.B. Verbindungen der Formel 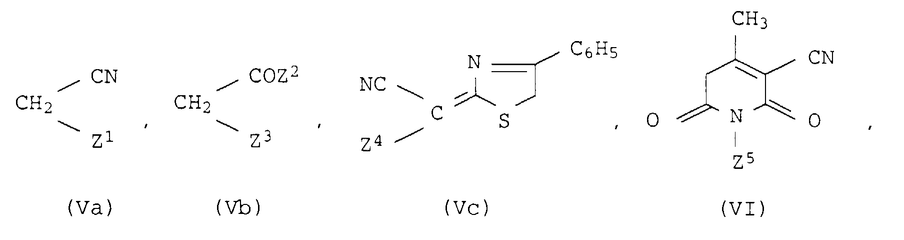 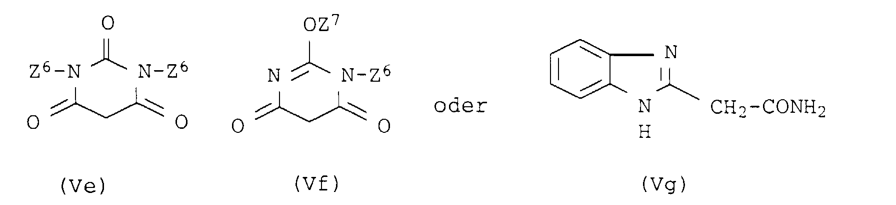 in Betracht kommen, wobei
- Z¹: Cyano, Nitro, C₁-C₄-Alkanoyl, gegebenenfalls substituiertes Benzoyl, C₁-C₄-Alkylsulfonyl, gegebenenfalls substituiertes Phenylsulfonyl, C₁-C₄-Alkoxycarbonyl, C₃-C₄-Alkenyloxycarbonyl, Phenoxycarbonyl, Carbamoyl, C₁-C₄-Mono- oder Dialkylcarbamoyl, gegebenenfalls substituiertes Phenylcarbamoyl, gegebenenfalls substituiertes Phenyl, Benzthiazol-2-yl, Benzimidazol-2-yl, 5-Phenyl-l,3,4-thiadiazol-2-yl oder 2-Hydroxychinoxalin-3-yl,
- Z²: C₁-C₄-Alkyl, C₁-C₄-Alkoxy oder C₃-C₄-Alkenyloxy,
- Z³: C₁-C₄-Alkoxycarbonyl, C₃-C₄-Alkenyloxycarbonyl, Phenylcarbamoyl oder Benzimidazol-2-yl,
- Z⁴: Cyano, C₁-C₄-Alkoxycarbonyl oder C₃-C₄-Alkenyloxycarbonyl,
- Z⁵: Wasserstoff oder C₁-C₆-Alkyl,
- Z⁶: Wasserstoff, C₁-C₄-Alkyl oder Phenyl und
- Z⁷: C₁-C₄-Alkyl bedeuten.

Dabei ist der Rest, der sich von Verbindungen der Formel Va, Vb oder Vc ableitet, worin Z¹ Cyano, C₁-C₄-Alkanoyl, C₁-C₄-Alkoxycarbonyl oder C₃-C₄-Alkenyloxycarbonyl, Z² C₁-C₄-Alkyl, C₁-C₄-Alkoxy oder C₃-C₄-Alkenyloxy, Z³ C₁-C₄-Alkoxycarbonyl oder C₃-C₄-Alkenyloxycarbonyl und Z⁴ Cyano bedeuten, hervorzuheben.

Besonders hervorzuheben ist dabei der Rest der sich von Verbindungen der Formel Va, Vb oder Vc ableitet, worin Z¹ Cyano, C₁-C₄-Alkoxycarbonyl oder C₃-C₄-Alkenyloxycarbonyl, Z² C₁-C₄-Alkoxy oder C₂-C₄-Alkenyloxy, Z³ C₁-C₄-Alkoxycarbonyl oder C₃-C₄-Alkenyloxycarbonyl und Z⁴ Cyano bedeuten.

Wenn L² und L³ oder L⁴ und L⁵ jeweils zusammen mit dem sie verbindenden Stickstoffatom einen fünf- oder sechsgliedrigen gesättigten heterocyclischen Rest, der gegebenenfalls weitere Heteroatome enthält, bedeuten, so können dafür z.B. Pyrrolidinyl, Piperidinyl, Morpholinyl, Piperazinyl oder N-(C₁-C₄-Alkyl)piperazinyl in Betracht kommen.

Bevorzugt werden Pyridinfarbstoffe der Formel Ia, Ib oder Ic, in der R³ Cyano bedeuten, im erfindungsgemäßen Verfahren verwendet.

Weiterhin bevorzugt werden Pyridinfarbstoffe der Formel Ia, Ib oder Ic, in der R⁴ Sauerstoff bedeutet, im erfindungsgemäßen Verfahren verwendet.

Weiterhin bevorzugt werden Pyridinfarbstoffe der Formel Ia, Ib oder Ic, in der R⁵ Methyl bedeutet, im erfindungsgemäßen Verfahren verwendet.

Weiterhin bevorzugt werden Pyridinfarbstoffe der Formel Ia, Ib oder Ic, in der R¹ und R⁶ unabhängig voneinander jeweils C₁-C₁₂-Alkyl, das gegebenenfalls durch C₁-C₆-Alkanoyloxy, C₁-C₈-Alkoxycarbonyl, deren Alkylkette jeweils durch ein oder zwei Sauerstoffatome in Etherfunktion unterbrochen sein kann, Phenyl oder C₁-C₄-Alkylphenyl substituiert ist und durch ein oder zwei Sauerstoffatome in Etherfunktion unterbrochen sein kann, bedeuten, im erfindungsgemäßen Verfahren verwendet.

Insbesondere bevorzugt werden Pyridinfarbstoffe der Formel Ia, Ib oder Ic, in der R¹ und R⁶ unabhängig voneinander jeweils Alkyl, Alkoxyalkyl, Alkanoyloxyalkyl oder Alkoxycarbonylalkyl, wobei diese Reste jeweils bis zu zwölf Kohlenstoffatome aufweisen, gegebenenfalls durch Methyl substituiertes Benzyl oder gegebenenfalls durch Methyl substituiertes Phenyl bedeutet, im erfindungsgemäßen Verfahren verwendet.

Weiterhin bevorzugt werden Pyridinfarbstoffe der Formel Ia, Ib oder Ic, in der R² einen Rest der Formel IVa, bedeutet, im erfindungsgemäßen Verfahren verwendet.

Wenn der Pyridinfarbstoff in der Farbstoffmischung ein Triazolopyridinfarbstoff der Formel Ia oder Ib ist, werden insbesondere solche der Formel Ia, in der A einen Rest der Formel C-R¹ und E Stickstoff bedeuten, im erfindungsgemäßen Verfahren verwendet.

Besonders bevorzugt werden weiterhin Pyridinfarbstoffe der Formel Ia, Ib oder Ic, in der R² einen Rest der Formel IVa bedeutet, worin L⁴ und L⁵ unabhängig voneinander jeweils für C₁-C₆-Alkyl oder L⁴ auch für Wasserstoff, R⁷ für C₁-C₆-Alkanoylamino und R⁸ für C₁-C₄-Alkyl stehen, im erfindungsgemäßen Verfahren verwendet.

Bevorzugt werden weiterhin solche Farbstoffmischungen übertragen, die mindestens einen Pyridinfarbstoff der Formel Ia, Ib oder Ic sowie mindestens einen Azofarbstoff der Formel II enthalten.

Bevorzugt werden weiterhin solche Farbstoffmischungen übertragen, die mindestens einen Pyridinfarbstoff der Formel Ia, Ib oder Ic sowie mindestens einen Azofarbstoff der Formel III enthalten.

Besonders bevorzugt werden Farbstoffmischungen übertragen, die einen Azofarbstoff der Formel II enthalten, in der Y Wasserstoff, Chlor oder Methyl und X einen Rest der Formel C-CN oder C-CO-OL¹ bedeuten, worin L¹ für C₁-C₆-Alkyl steht.

Besonders bevorzugt werden weiterhin Farbstoffmischungen übertragen, die einen Azofarbstoff der Formel II enthalten, in der T für Sauerstoff oder einen Rest der Formel =C(CN)Z¹ steht, worin Z¹ die obengenannte Bedeutung besitzt.

Besonders bevorzugt werden weiterhin Farbstoffmischungen übertragen, die einen Azofarbstoff der Formel II enthalten, in der K einen Rest der Formel IVa bedeutet, worin L⁴ und L⁵ unabhängig voneinander jeweils für C₁-C₆-Alkyl oder L⁴ auch für Wasserstoff, R⁷ für C₁-C₆-Alkanoylamino, R⁸ für C₁-C₆-Alkyl.

Daneben ist die Übertragung von Farbstoffmischungen bevorzugt, in denen die Substituenten in den Formeln der einzelnen Mischungspartner aus einer Kombination der oben aufgeführten bevorzugten Substituenten ausgewählt ist.

Die im erfindungsgemäßen Verfahren zur Anwendung gelangenden Farbstoffmischungen enthalten in der Regel jeweils 10 bis 90 Gew.-%, vorzugsweise 25 bis 75 Gew.-% und insbesondere 40 bis 60 Gew.-%, jeweils bezogen auf das Gewicht der Farbstoffmischung, eines oder mehrerer Pyridinfarbstoffe der Formel Ia, Ib oder Ic, sowie eines oder mehrerer Azofarbstoffe der Formel II und/oder III. Die Summe der in den Mischungen enthaltenen Farbstoffe beträgt dabei immer 100 Gew.-%.

Die Farbstoffmischungen können nach an sich bekannten Methoden, z.B. durch Abmischen der Einzelfarbstoffe im obengenannten Gewichtsverhältnis erhalten werden.

Die Pyridinfarbstoffe der Formel I sind an sich bekannt und beispielsweise in der US-A-5 079 365, WO-A-95/17470, WO-A-95/22581 oder in der EP-A-727 463 (die als Stand der Technik gemäß A 54 (3) EPÜ gilt) beschrieben oder können nach den dort genannten Methoden erhalten werden.

Die Azofarbstoffe der Formeln II und III sind ebenfalls an sich bekannt und z.B. in der US-A-5 283 326, EP-A-302 628 sowie EP-A-218 397 beschrieben oder können nach den dort genannten Methoden erhalten werden.

Zur Herstellung der für das erfindungsgemäße Verfahren benötigten Farbstoffträger werden die Farbstoffmischungen in einem geeigneten organischen Lösungsmittel oder in Mischungen von Lösungsmitteln mit einem oder mehreren Bindemitteln, gegebenenfalls unter Zugabe von Hilfsmitteln, zu einer Druckfarbe verarbeitet. Diese enthält die Farbstoffe vorzugsweise in molekulardispers gelöster Form. Die Druckfarbe kann mittels einer Rakel auf den inerten Träger aufgetragen und die Färbung an der Luft getrocknet werden. Geeignete organische Lösungsmittel für die Farbstoffmischungen sind z.B. solche, in denen die Löslichkeit der Farbstoffmischungen bei einer Temperatur von 20°C größer als 1 Gew.-%, vorzugsweise größer als 5 Gew.-% ist.

Beispielhaft seien Ethanol, Propanol, Isobutanol, Tetrahydrofuran, Methylenchlorid, Methylethylketon, Cyclopentanon, Cyclohexanon, Toluol, Chlorbenzol oder deren Mischungen genannt.

Als Bindemittel kommen alle Resins oder Polymermaterialien in Betracht, die in organischen Lösungsmitteln löslich sind und die die Farbstoffmischungen an den inerten Träger abriebfest zu binden vermögen. Dabei werden solche Bindemittel bevorzugt, die die Farbstoffmischung nach Trocknung der Druckfarbe an der Luft in Form eines klaren, transparenten Films aufnehmen, ohne daß dabei eine sichtbare Auskristallisation der Farbstoffe auftritt.

Solche Bindemittel sind beispielsweise in der US-A-5 132 438 oder in den entsprechenden dort zitierten Patentanmeldungen genannt. Darüber hinaus sind gesättigte lineare Polyester zu nennen.

Bevorzugte Bindemittel sind Ethylcellulose, Ethylhydroxyethylcellulose, Polyvinylbutyral, Polyvinylacetat, Cellulosepropionat oder gesättigte lineare Polyester.

Das Gewichtsverhältnis Bindemittel: Farbstoffmischung beträgt im allgemeinen 1:1 bis 10:1.

Als Hilfsmittel kommen z.B. Trennmittel in Betracht, wie sie in der US-A-5 132 438 oder den entsprechend dort zitierten Patentanmeldungen genannt sind. Darüber hinaus sind besonders organische Additive zu nennen, welche das Auskristallisieren der Transferfarbstoffe bei Lagerung oder beim Erhitzen des Farbbandes verhindern, z.B. Cholesterin oder Vanillin.

Geeignete inerte Träger sind z.B. in der US-A-5 132 438 oder in den entsprechenden dort zitierten Patentanmeldungen beschrieben. Die Dicke des Farbstoffträgers beträgt im allgemeinen 3 bis 30 µm, vorzugsweise 5 bis 10 µm.

Als Farbstoffnehmerschicht kommen prinzipiell alle temperaturstabilen Kunststoffschichten mit Affinität zu den zu transferierenden Farbstoffen in Betracht, z.B. modifizierte Polycarbonate oder Polyester. Weitere Einzelheiten dazu können z.B. aus der US-A-5 132 438 oder den entsprechenden dort zitierten Patentanmeldungen entnommen werden.

Die Übertragung erfolgt mittels einer Energiequelle, z.B. mittels eines Lasers oder eines Thermokopfes, wobei letzterer auf eine Temperatur von ≥ 300°C aufheizbar sein muß, damit der Farbstofftransfer im Zeitbereich t: 0 < t < 15 ms erfolgen kann. Dabei migriert der Farbstoff aus dem Transferblatt und diffundiert in die Oberflächenbeschichtung des Aufnahmemediums.

Die erfindungsgemäßen Verfahren zur Anwendung gelangenden Farbstoffmischungen zeichnen sich durch vorteilhafte anwendungstechnische Eigenschaften aus. Sie weisen eine hohe Löslichkeit im Farbband (gute Kompatibilität mit dem Bindemittel), eine hohe Stabilität in der Druckfarbe, eine gute Lichtechtheit sowie gute Stabilität gegenüber Umwelteinflüssen, z.B. Feuchtigkeit, Temperatur oder Chemikalien) auf und gewährleisten eine flexible coloristische Anpassung an die restlichen subtraktiven Grundfarben, wodurch hochwertige Farbenräume resultieren. Außerdem erlauben die erfindungsgemäßen Farbstoffmischungen die Herstellung von guten Schwarzmischungen.

Im erfindungsgemäßen Verfahren ist die spektral gleichmäßige Abnahme der Einzelkomponenten bei Bestrahlung hervorzuheben, d.h. der Einzelfarbstoff mit der geringeren Lichtechtheit nimmt nicht bevorzugt ab.

Die folgenden Beispiele sollen die Erfindung näher erläutern.

In den folgenden Tabellen 1 bis 6 sind die Einzelfarbstoffe aufgeführt, die als Mischungspartner dienen.

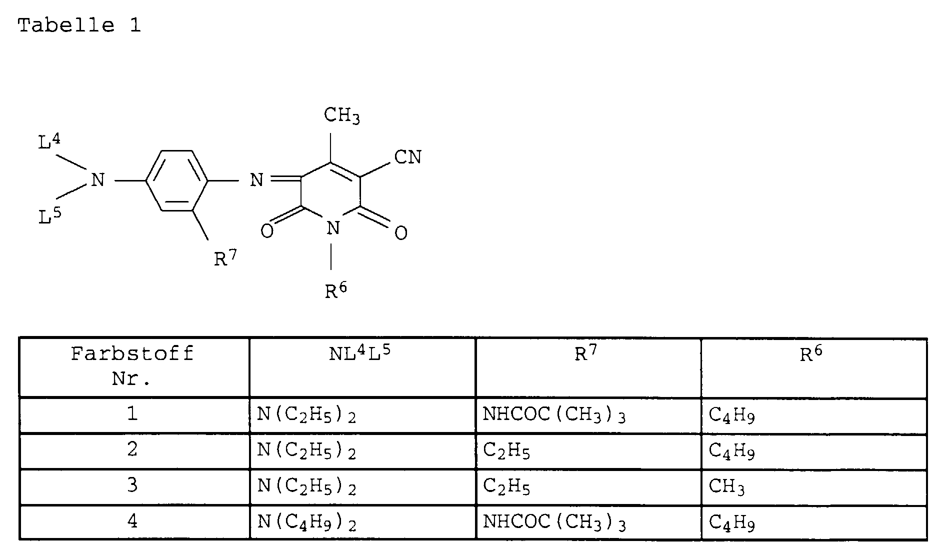

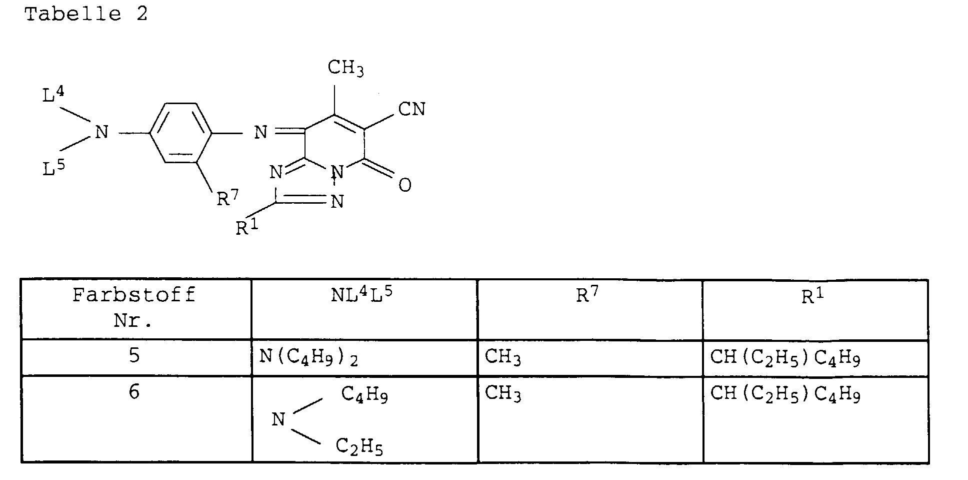

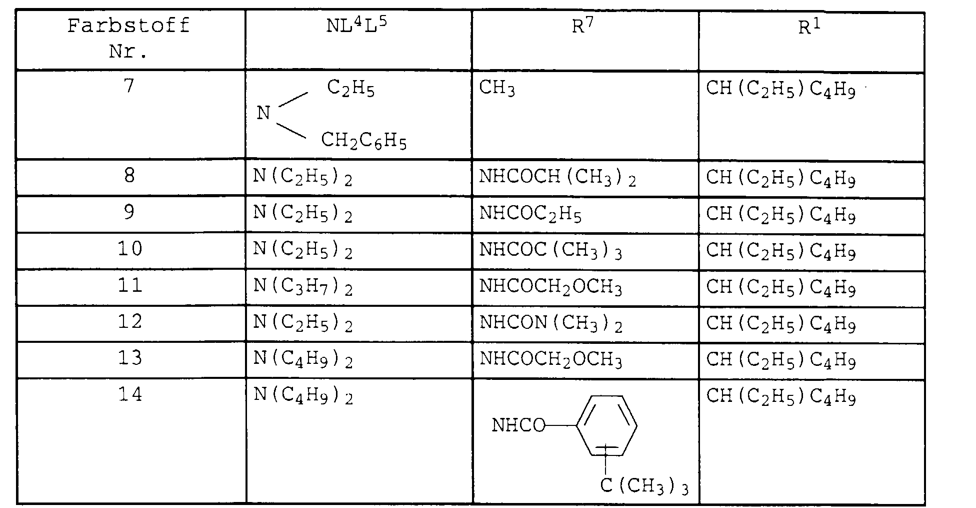

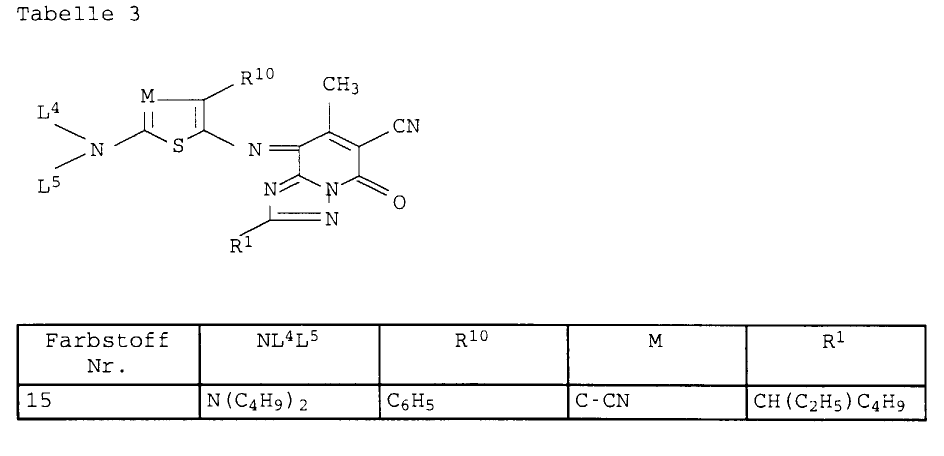

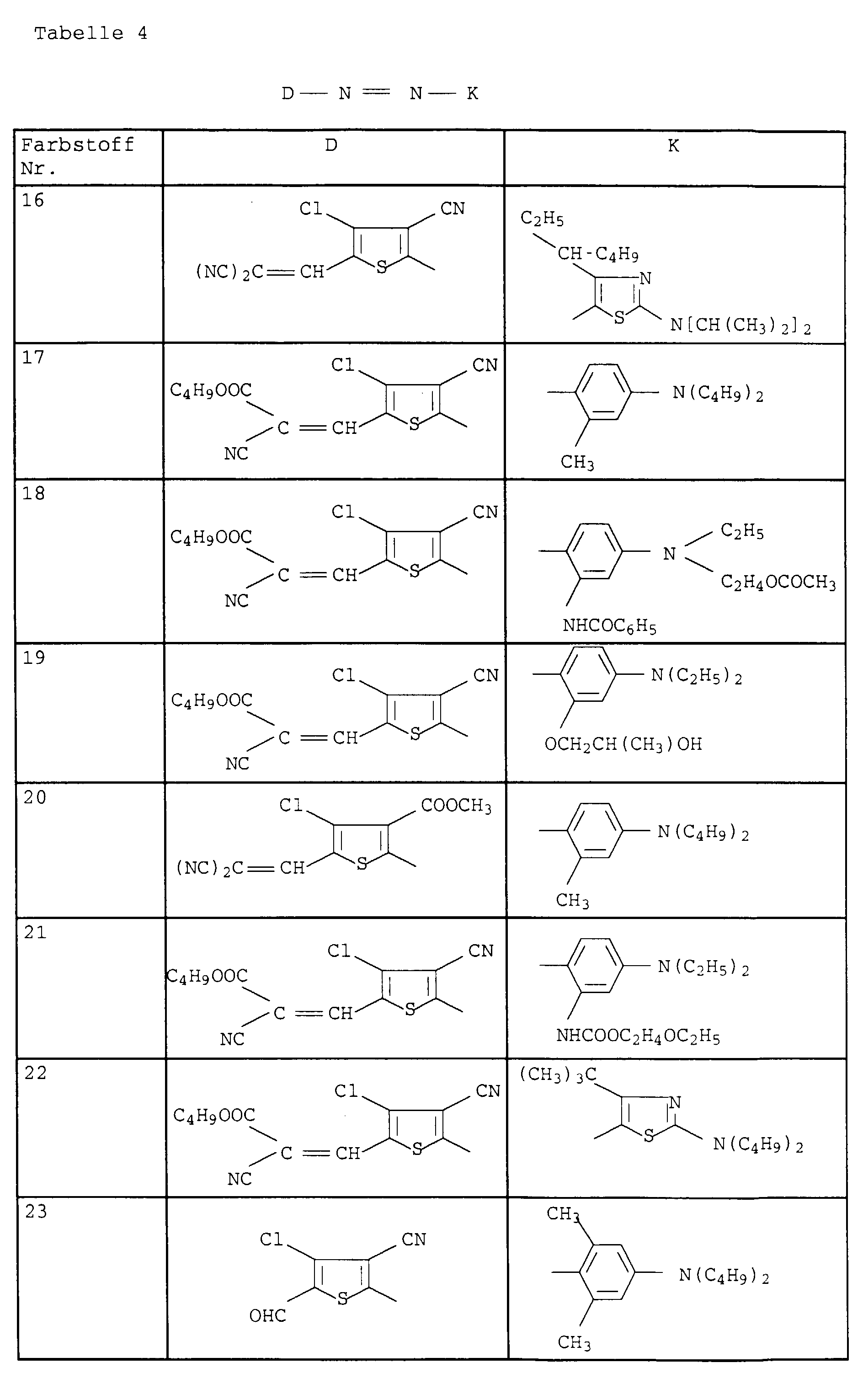

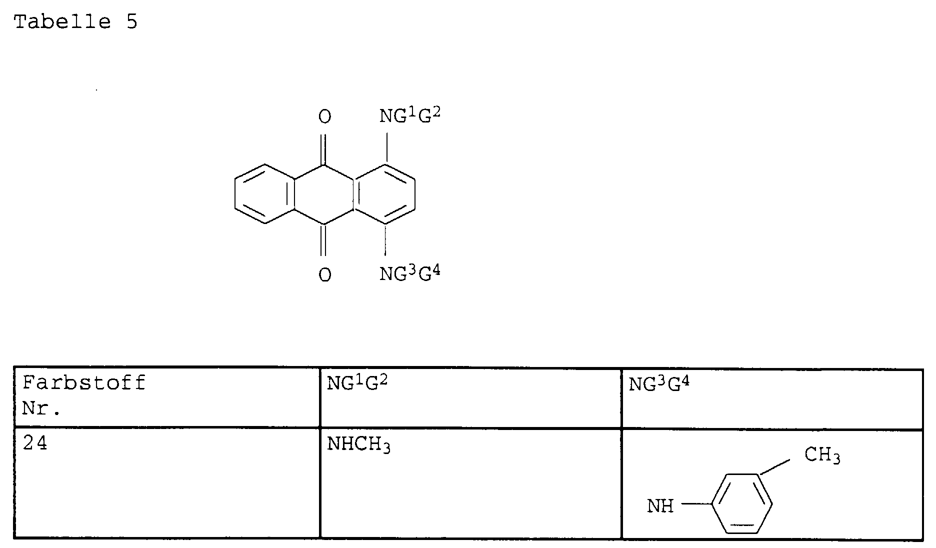

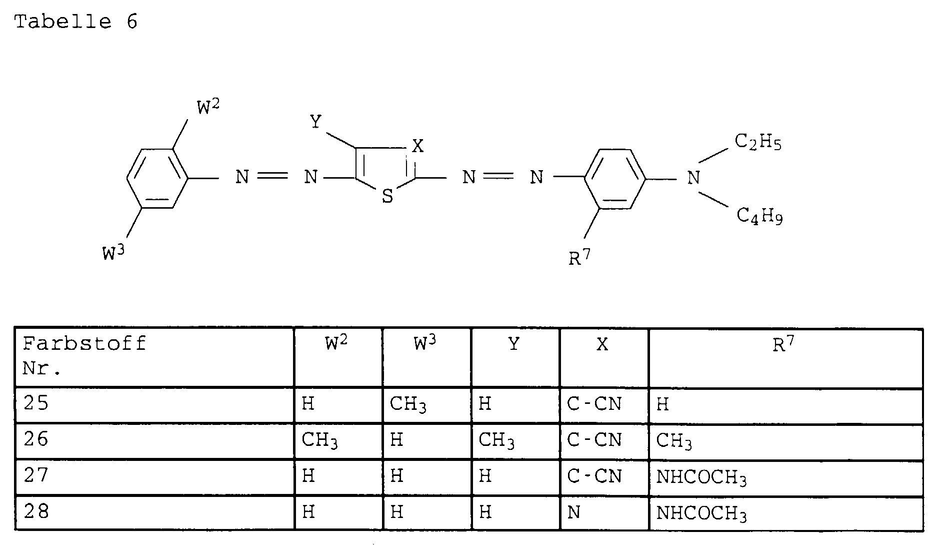

Vorschrift für die thermische Übertragung:
a. 10 g Farbstoffmischung werden, gegebenenfalls unter kurzzeitigem Erwärmen auf 80 bis 90°C, in 100 g einer 10 gew.-%igen Lösung eines Bindemittels auf Basis von Polyvinylbutyral in einem Methylethylketon/Toluol/Cyclohexanon-Gemisch (4,5:2:2 v/v/v) eingerührt.
   Das Gemisch wird mit einer 10 µm-Rakel auf eine Polyesterfolie von 6 µm Dicke, auf deren Rückseite eine geeignete Gleitschicht aufgebracht ist, aufgerakelt und mit einem Föhn 1 Minute trockengeblasen. Bevor das Farbband verdruckt werden kann, muß es mindestens 24 Stunden an der Luft nachtrocknen, da Restlösungsmittel den Druckvorgang beeinträchtigen können.
b. Die Farbbänder werden auf einer rechnergesteuerten Versuchsanordnung, die mit einem handelsüblichen Thermokopf ausgestattet ist, auf handelsübliches Videoprintpapier (Color Videoprint Paper der Firma Hitachi) verdruckt.
   Durch Veränderung der Spannung wird die Energieabgabe des Thermokopfs gesteuert, wobei die eingestellte Impulsdauer 7 ms beträgt und immer nur ein Impuls abgegeben wird. Die abgegebene Energie liegt zwischen 0,5 und 2,0 mJ/Dot.
   Da die Höhe der Anfärbung direkt proportional der zugeführten Energie ist, kann dein Farbkeil erzeugt und spektroskopisch ausgewertet werden.
   Aus der graphischen Auftragung der Farbtiefe gegen die zugeführte Energie je Heizelement wird der Q∗-Wert (= Energie in mJ für den Extinktionswert 1) und die Steigung m in 1/mJ ermittelt.

Die erhaltenen Ergebnisse sind in der folgenden Tabelle 7 aufgeführt.

**Tabelle 7**

| Mischung der Farbstoffe | Gewichtsverhältnis | Q* [mJ/Dot] | m* [1/mJ] |
|---|---|---|---|
| 1/16 | 1:1 | 1,07 | 1,91 |
| 1/18 | 1:1 | 1,06 | 1,80 |
| 1/19 | 1:1 | 1,27 | 1,37 |
| 1/20 | 1:1 | 1,00 | 2,12 |
| 1/21 | 1:1 | 1,06 | 1,93 |
| 1/22 | 1:1 | 1,08 | 1,66 |
| 2/16 | 1:1 | 1,03 | 1,74 |
| 2/17/24 | 1:1:1 | 0,98 | 2,15 |
| 2/18 | 1:1 | 1,00 | 1,94 |
| 2/19 | 1:1 | 1,07 | 1,94 |
| 2/20 | 1:1 | 0,95 | 2,41 |
| 2/21 | 1:1 | 0,95 | 2,13 |
| 2/22 | 1:1 | 0,94 | 2,33 |
| 4/23 | 1:1 | 1,11 | 1,88 |
| 6/17 | 1:1 | 0,91 | 2,13 |
| 6/23 | 1:1 | 1,00 | 1,98 |
| 7/16 | 1:1 | 1,05 | 1,49 |
| 7/18 | 1:1 | 1,19 | 1,45 |
| 7/20 | 1:1 | 1,04 | 1,63 |
| 7/21 | 1:1 | 1,02 | 1,88 |
| 7/22 | 1:1 | 1,05 | 1,86 |
| 7/23 | 1:1 | 1,07 | 1,95 |
| 9/16 | 1:1 | 1,05 | 1,74 |
| 9/17 | 1:1 | 0,93 | 2,30 |
| 9/18 | 1:1 | 1,10 | 1,68 |
| 9/20 | 1:1 | 1,00 | 1,90 |
| 9/21 | 1:1 | 1,06 | 1,83 |
| 9/22 | 1:1 | 0,96 | 1,75 |
| 9/23 | 1:1 | 0,95 | 1,84 |
| 10/17 | 1:1 | 0,90 | 2,41 |
| 11/16 | 1:1 | 1,09 | 1,41 |
| 11/18 | 1:1 | 1,09 | 1,86 |
| 11/21 | 1:1 | 1,06 | 1,62 |
| 11/22 | 1:1 | 1,05 | 1,72 |
| 12/16 | 1:1 | 1,09 | 1,79 |
| 12/18 | 1:1 | 1,12 | 1,81 |
| 12/20 | 1:1 | 1,00 | 2,20 |
| 12/21 | 1:1 | 1,10 | 1,64 |
| 12/22 | 1:1 | 1,10 | 1,63 |
| 13/23 | 1:1 | 1,06 | 1,88 |
| 14/23 | 1:1 | 1,10 | 1,96 |
| 15/17/24 | 1:1:1 | 1,07 | 1,66 |

Sehr gute Ergebnisse werden auch mit Mischungen der Farbstoffe 25 bis 28 mit dem Farbstoff 7 erhalten. Dabei erweist sich der Zusatz des Farbstoffs 24, wobei Dreiermischungen erhalten werden, im Hinblick auf eine flexible Optimierung des gesamten Eigenschaftsprofils als vorteilhaft.

## Patentansprüche

1. Verfahren zur Übertragung von Farbstoffmischungen von einem Träger auf ein mit Kunststoff beschichtetes Papier durch Diffusion oder Sublimation mit Hilfe einer Energiequelle, dadurch gekennzeichnet, daß man einen Träger verwendet, auf dem sich eine Farbstoffmischung befindet, enthaltend mindestens einen Pyridinfarbstoff der Formel Ia, Ib oder Ic 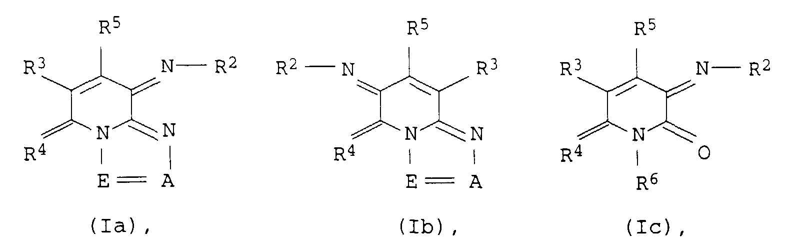 worin
einer der beiden Reste A oder E Stickstoff und der andere
einen Rest der Formel C-R¹, in der R¹ für C₁-C₂₀-Alkyl, das gegebenenfalls substituiert ist und durch ein bis vier Sauerstoffatome in Etherfunktion unterbrochen sein kann, gegebenenfalls substituiertes Phenyl oder Hydroxy steht,
R² einen Rest der Formeln IVa bis IVh 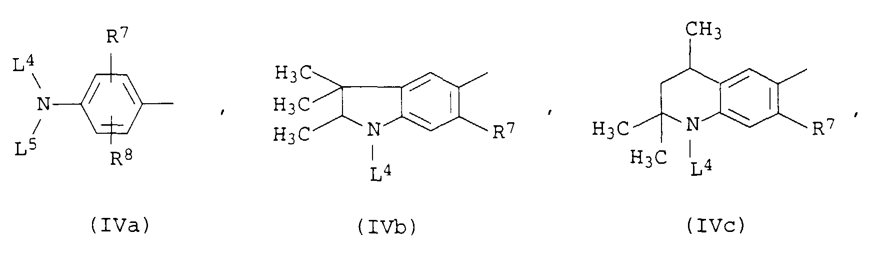 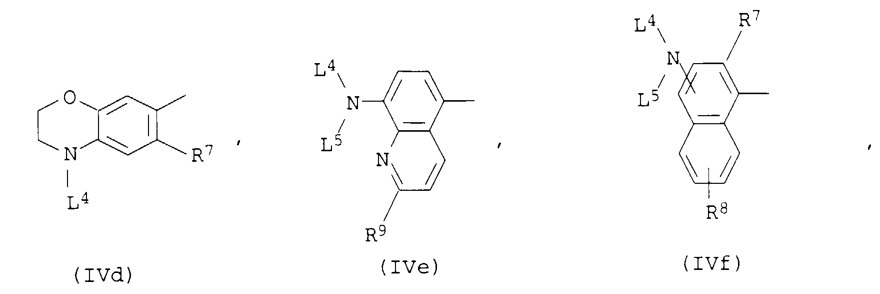 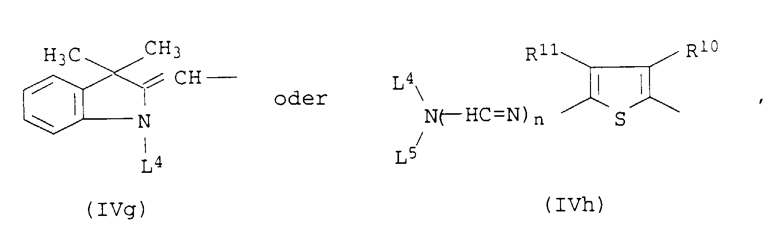
worin
n 0 oder 1,
R⁷ für Wasserstoff, C₁-C₈-Alkyl, das gegebenenfalls durch ein oder zwei Sauerstoffatome in Etherfunktion unterbrochen ist, Hydroxy, C₁-C₄-Alkoxy, das durch Hydroxy substituiert sein kann, insbesondere Methoxy oder Ethoxy, Formylamino, C₁-C₄-Alkylsulfonylamino, C₁-C₄-Mono- oder Dialkylaminosulfonylamino oder den Rest -NHCONHQ, -NHCOQ oder -NHCO₂Q, wobei Q die Bedeutung von Phenyl, Benzyl, C₁-C₄-Alkylphenyl oder C₁-C₈-Alkyl, das gegebenenfalls durch ein oder zwei Sauerstoffatome in Etherfunktion unterbrochen ist, besitzt,
R⁸ für Wasserstoff, C₁-C₄-Alkyl, insbesondere Methyl, oder C₁-C₄-Alkoxy, insbesondere Methoxy oder Ethoxy,
L⁴ und L⁵ unabhängig voneinander jeweils für Wasserstoff, C₁-C₈-Alkyl, das gegebenenfalls substituiert ist und durch ein oder zwei Sauerstoffatome in Etherfunktion unterbrochen sein kann, C₃-C₄-Alkenyl, C₅-C₇-Cycloalkyl, gegebenenfalls substituiertes Phenyl oder zusammen mit dem sie verbindenden Stickstoffatom für einen fünf- oder sechsgliedrigen gesättigten heterocyclischen Rest, der gegebenenfalls weitere Heteroatome enthält,
R⁹ für Wasserstoff oder C₁-C₄-Alkyl, insbesondere Methyl,
R¹⁰ für Wasserstoff, Halogen, C₁-C₈-Alkyl, gegebenenfalls substituiertes Phenyl, gegebenenfalls substituiertes Benzyl, Cyclohexyl, Thienyl, Hydroxy, C₁-C₄-Alkoxy, C₁-C₄-Alkylthio oder C₁-C₈-Monoalkylamino und
R¹¹ für Cyano, Carbamoyl, C₁-C₈-Mono- oder Dialkylcarbamoyl, C₁-C₈-Alkoxycarbonyl oder gegebenenfalls substituiertes Phenyl stehen,
R³ Cyano, Carbamoyl, Carboxyl oder C₁-C₄-Alkoxycarbonyl,
R⁴ Sauerstoff oder einen Rest der Formel C(CN)₂, C(CN)COOL¹ oder C(COOL¹)₂, wobei L¹ jeweils für C₁-C₈-Alkyl, das gegebenenfalls durch ein oder zwei Sauerstoffatome in Etherfunktion unterbrochen ist, oder Phenyl steht,
R⁵ Wasserstoff, C₁-C₈-Alkyl, das gegebenenfalls substituiert ist und durch ein oder zwei Sauerstoffatome in Etherfunktion unterbrochen sein kann, oder gegebenenfalls substituiertes Phenyl und
R⁶ C₁-C₂₀-Alkyl, das gegebenenfalls substituiert ist und durch ein bis vier Sauerstoffatome in Etherfunktion unterbrochen sein kann, gegebenenfalls substituiertes Phenyl, Hydroxy oder einen Rest der Formel NL²L³, wobei L² und L³ unabhängig voneinander jeweils für Wasserstoff, gegebenenfalls substituiertes C₁-C₁₂-Alkyl, C₅-C₇-Cycloalkyl, gegebenenfalls substituiertes Phenyl, gegebenenfalls substituiertes Pyridyl, gegebenenfalls substituiertes C₁-C₁₂-Alkanoyl, C₁-C₁₂-Alkoxycarbonyl, gegebenenfalls substituiertes C₁-C₁₂-Alkylsulfonyl, C₅-C₇-Cycloalkylsulfonyl, gegebenenfalls substituiertes Phenylsulfonyl, gegebenenfalls substituiertes Pyridylsulfonyl, gegebenenfalls substituiertes Benzoyl, Pyridylcarbonyl oder Thienylcarbonyl oder L² und L³ zusammen mit dem sie verbindenden Stickstoffatom gegebenenfalls durch C₁-C₄-Alkyl substituiertes Succinimido, gegebenenfalls durch C₁-C₄-Alkyl substituiertes Phthalimido oder einen fünf- oder sechsgliedrigen gesättigten heterocyclischen Rest, der gegebenenfalls weitere Heteroatome enthält, stehen, bedeuten,
sowie mindestens einen Farbstoff der Formel 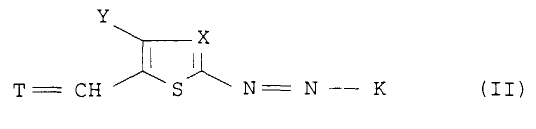 oder 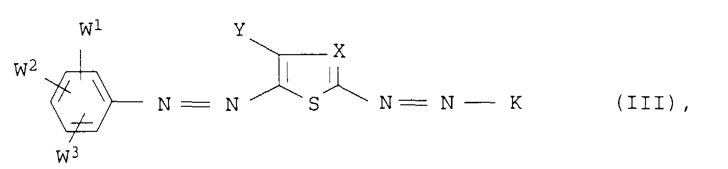 worin
T Sauerstoff oder den Rest einer CH-aciden Verbindung H₂T,
Y Wasserstoff, Halogen, gegebenenfalls substituiertes C₁-C₈-Alkyl, das durch ein oder zwei Sauerstoffatome in Etherfunktion unterbrochen sein kann, gegebenenfalls substituiertes Phenyl, gegebenenfalls substituiertes Thienyl oder gegebenenfalls substituiertes Pyridyl,
X Stickstoff oder einen Rest der Formel C-CN, C-CO-L¹, C-CO-N(L¹)₂ oder C-CO-OL¹, worin L¹ jeweils die obengenannte Bedeutung besitzt,
K den Rest einer Kupplungskomponente aus der Anilin- oder Thiazolreihe,
W¹ Wasserstoff, Cyano, Nitro oder einen Rest der Formel CO-L¹, SO₂-L¹, CO-N(L¹)₂^{,} SO₂-N(L¹)₂^{,} CO-OL¹ oder SO₂-OL¹, worin L¹ jeweils die obengenannte Bedeutung besitzt, und
W² und W³ unabhängig voneinander jeweils Wasserstoff, Halogen, Trifluormethyl, C₁-C₄-Alkyl, C₁-C₄-Alkoxy oder einen Rest der Formel N(L¹)₂, worin L¹ die obengenannte Bedeutung besitzt, bedeuten.

2. Verfahren nach Anspruch 1, dadurch gekennzeichnet, daß R³ Cyano bedeutet.

3. Verfahren nach Anspruch 1, dadurch gekennzeichnet, daß R⁴ Sauerstoff bedeutet.

4. Verfahren nach Anspruch 1, dadurch gekennzeichnet, daß R⁵ Methyl bedeutet

5. Verfahren nach Anspruch 1, dadurch gekennzeichnet, daß R¹ und R⁶ unabhängig voneinander jeweils C₁-C₁₂-Alkyl, das gegebenenfalls durch C₁-C₆-Alkanoyloxy, C₁-C₈-Alkoxycarbonyl, deren Alkylkette jeweils durch ein oder zwei Sauerstoffatome in Etherfunktion unterbrochen sein kann, Phenyl oder C₁-C₄-Alkylphenyl substituiert ist und durch ein oder zwei Sauerstoffatome in Etherfunktion unterbrochen sein kann.

6. Verfahren nach Anspruch 1, dadurch gekennzeichnet, daß R² einen Rest der Formel IVa bedeutet.

7. Verfahren nach Anspruch 1, dadurch gekennzeichnet, daß man Farbstoffmischungen überträgt, die mindestens einen Pyridinfarbstoff der Formel Ia, Ib oder Ic sowie mindestens einen Azofarbstoff der Formel II enthalten.

8. Verfahren nach Anspruch 1, dadurch gekennzeichnet, daß man Farbstoffmischungen überträgt, die mindestens einen Pyridinfarbstoff der Formel Ia, Ib oder Ic sowie mindestens einen Azofarbstoff der Formel III enthalten.

9. Verfahren nach Anspruch 1, dadurch gekennzeichnet, daß Y Wasserstoff, Chlor oder Methyl und X einen Rest der Formel C-CN oder C-CO-OL¹ bedeuten, worin L¹ für C₁-C₆-Alkyl steht.

## Claims

1. A process for transferring dye mixtures from a transfer to a plastic-coated paper by diffusion or sublimation with the aid of an energy source, which comprises using a transfer comprising a dye mixture comprising at least one pyridine dye of the formula Ia, Ib or Ic 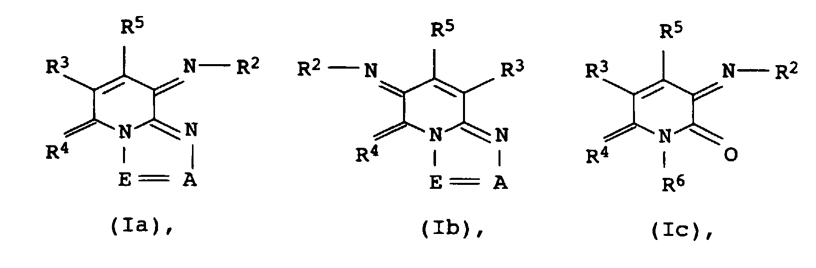 where
one of A and E is nitrogen and the other is
a radical of the formula C-R¹, where R¹ is C₁-C₂₀-alkyl with or without substitution and with or without interruption by from one to four oxygen atoms in ether function, substituted or unsubstituted phenyl or hydroxyl,
R² is a radical of the formulae IVa to IVh 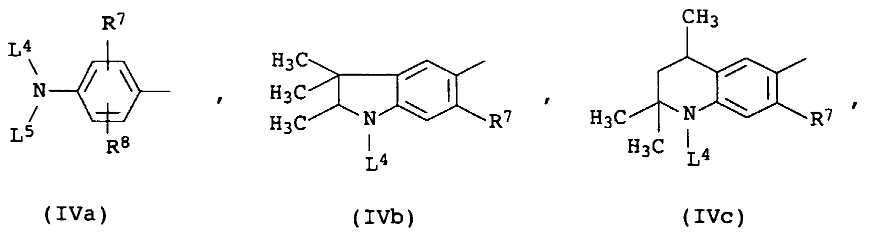 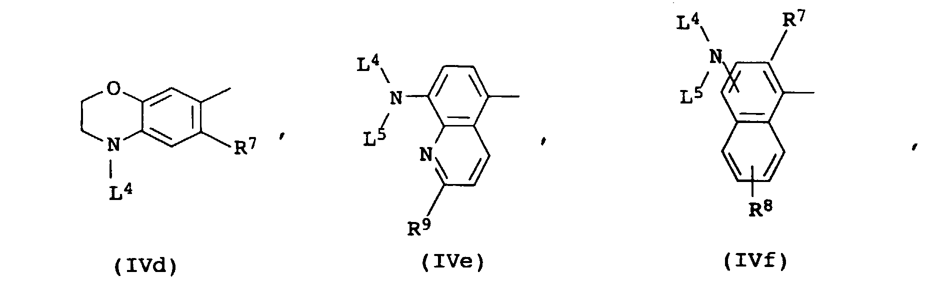 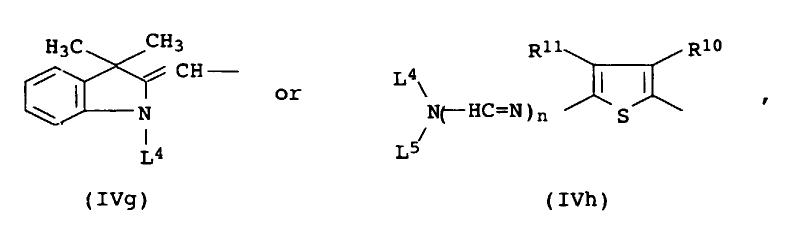
where
n is 0 or 1,
R⁷ is hydrogen, C₁-C₈-alkyl with or without interruption by one or two oxygen atoms in ether function, hydroxyl, unsubstituted or hydroxyl-substituted C₁-C₄-alkoxy, especially methoxy or ethoxy, formylamino, C₁-C₄-alkylsulfonylamino, mono- or di(C₁-C₄-alkyl)aminosulfonylamino or the radical -NHCONHQ, -NHCOQ or -NHCO₂Q, where Q is phenyl, benzyl, C₁-C₄-alkylphenyl or C₁-C₈-alkyl with or without interruption by one or two oxygen atoms in ether function,
R⁸ is hydrogen, C₁-C₄-alkyl, especially methyl, or C₁-C₄-alkoxy, especially methoxy or ethoxy,
L⁴ and L⁵ are singly hydrogen, C₁-C₈-alkyl with or without substitution and with or without interruption by one or two oxygen atoms in ether function, C₃-C₄-alkenyl, C₅-C₇-cycloalkyl, substituted or unsubstituted phenyl, or together with the nitrogen atom joining them together a five- or six-membered saturated heterocyclic radical with or without further heteroatoms,
R⁹ is hydrogen or C₁-C₄-alkyl, especially methyl,
R¹⁰ is hydrogen, halogen, C₁-C₈-alkyl, substituted or unsubstituted phenyl, substituted or unsubstituted benzyl, cyclohexyl, thienyl, hydroxyl, C₁-C₄-alkoxy, C₁-C₄-alkylthio or mono(C₁-C₈-alkyl)amino, and
R¹¹ is cyano, carbamoyl, mono- or di(C₁-C₈-alkyl)carbamoyl, C₁-C₈-alkoxycarbonyl or substituted or unsubstituted phenyl,
R³ is cyano, carbamoyl, carboxyl or C₁-C₄-alkoxycarbonyl,
R⁴ is oxygen or a radical of the formula C(CN)₂, C(CN)COOL¹ or C(COOL¹)2, where L¹ is in each case C₁-C₈-alkyl with or without interruption by one or two oxygen atoms in ether function or phenyl,
R⁵ is hydrogen, C₁-C₈-alkyl with or without substitution and with or without interruption by one or two oxygen atoms in ether function, or substituted or unsubstituted phenyl, and
R⁶ is C₁-C₂₀-alkyl with or without substitution and with or without interruption by from one to four oxygen atoms in ether function, substituted or unsubstituted phenyl, hydroxyl or a radical of the formula NL²L³, where L² and L³ are independently of each other hydrogen, substituted or unsubstituted C₁-C₁₂-alkyl, C₅-C₇-cycloalkyl, substituted or unsubstituted phenyl, substituted or unsubstituted pyridyl, substituted or unsubstituted C₁-C₁₂-alkanoyl, C₁-C₁₂-alkoxycarbonyl, substituted or unsubstituted C₁-C₁₂-alkylsulfonyl, C₅-C₇-cycloalkylsulfonyl, substituted or unsubstituted phenylsulfonyl, substituted or unsubstituted pyridylsulfonyl, substituted or unsubstituted benzoyl, pyridylcarbonyl or thienylcarbonyl, or together with the nitrogen atom joining them together unsubstituted or C₁-C₄-alkyl-substituted succinimido, unsubstituted or C₁-C₄-alkyl-substituted phthalimido or a five- or six-membered saturated heterocyclic radical with or without further heteroatoms,
and also at least one dye of the formula 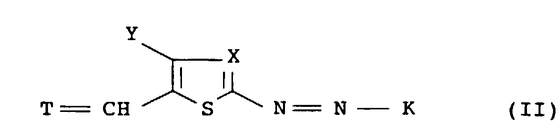 or 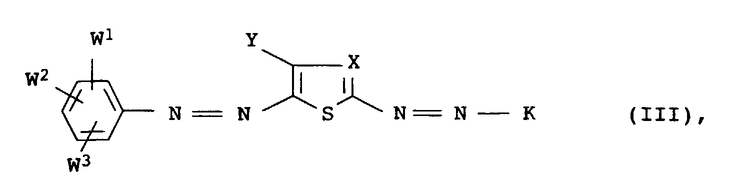 where
T is oxygen or the radical of a CH-acidic compound H₂T,
y is hydrogen, halogen, substituted or unsubstituted C₁-C₈-alkyl with or without interruption by one or two oxygen atoms in ether function, substituted or unsubstituted phenyl, substituted or unsubstituted thienyl or substituted or unsubstituted pyridyl,
X is nitrogen or a radical of the formula C-CN, C-CO-L¹, C-CO-N(L¹)₂ or C-CO-OL¹, where L¹ is in each case as defined above,
K is the radical of a coupling component of the aniline or thiazole series,
W¹ is hydrogen, cyano, nitro or a radical of the formula CO-L¹, SO₂-L¹, CO-N(L¹)₂, SO₂-N(L¹)₂, CO-OL¹ or SO₂-OL¹, where L¹ is in each case as defined above, and
W² and W³ are independently of each other hydrogen, halogen, trifluoromethyl, C₁-C₄-alkyl, C₁-C₄-alkoxy or a radical of the formula N(L¹)₂, where L¹ is as defined above.

2. A process as claimed in claim 1, wherein R³ is cyano.

3. A process as claimed in claim 1, wherein R⁴ is oxygen.

4. A process as claimed in claim 1, wherein R⁵ is methyl.

5. A process as claimed in claim 1, wherein R¹ and R⁶ are independently of each other C₁-C₁₂-alkyl with or without substitution by C₁-C₆-alkanoyloxy, C₁-C₈-alkoxycarbonyl, whose alkyl chain may in each case be interrupted by one or two oxygen atoms in ether function, phenyl or C₁-C₄-alkylphenyl and with or without interruption by one or two oxygen atoms in ether function.

6. A process as claimed in claim 1, wherein R² is a radical of the formula IVa.

7. A process as claimed in claim 1, wherein the dye mixtures transferred comprise at least one pyridine dye of the formula Ia, Ib or Ic and also at least one azo dye of the formula II.

8. A process as claimed in claim 1, wherein the dye mixtures transferred comprise at least one pyridine dye of the formula Ia, Ib or Ic and also at least one azo dye of the formula III.

9. A process as claimed in claim 1, wherein Y is hydrogen, chlorine or methyl and X is a radical of the formula C-CN or C-CO-OL¹ where L¹ is C₁-C₆-alkyl.

## Revendications

1. Procédé pour transférer des mélanges de colorants d'un support à un papier enduit de plastique, par diffusion ou sublimation à l'aide d'une source d'énergie, caractérisé en ce qu'on utilise un support sur lequel se trouve un mélange de colorants contenant au moins un colorant de pyridine de formules Ia, Ib ou Ic 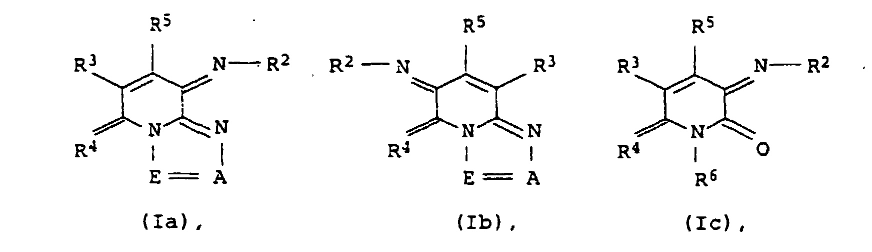 dans lesquelles :
l'un des deux radicaux A ou E est un atome d'azote, et l'autre est un radical de formule C-R¹ dans laquelle R¹ est un groupe alkyle en C₁-C₂₀, qui est éventuellement substitué et peut être interrompu par un à quatre atomes d'oxygène en fonction éther, un groupe phényle éventuellement substitué ou hydroxy,
R² est un radical de formules IVa à IVh 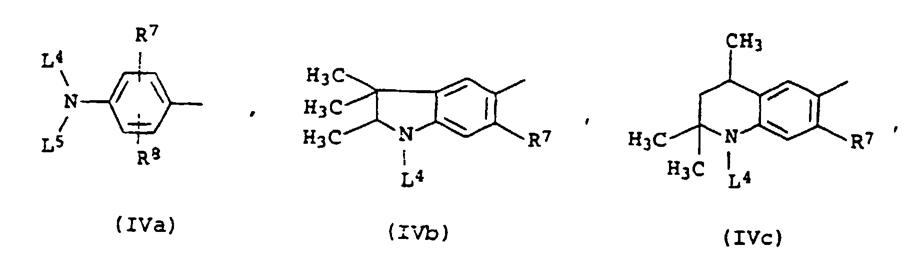 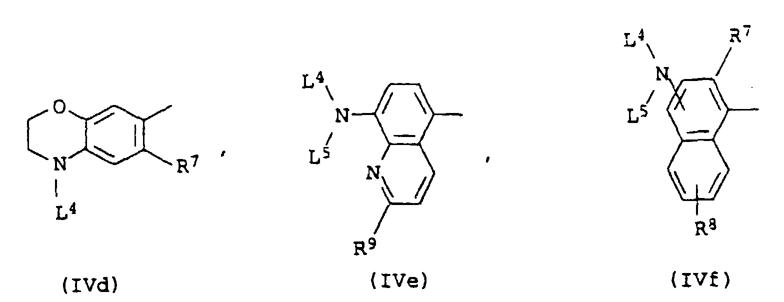 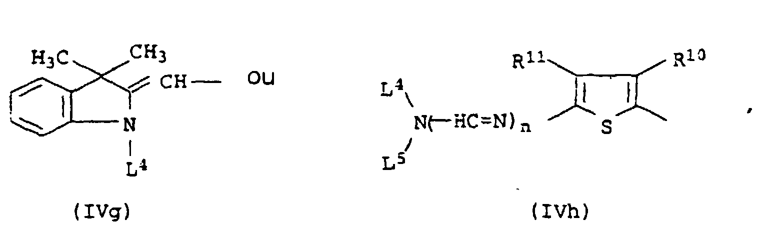 dans lesquelles
n vaut 0 ou 1,
R⁷ est un atome d'hydrogène, un groupe alkyle en C₁-C₈, qui est éventuellement interrompu par un ou deux atomes d'oxygène en fonction éther, hydroxy, alcoxy en C₁-C₄ qui peut être substitué par des substituants hydroxy, en particulier les groupes méthoxy ou éthoxy, formylamino, alkyl-sulfonylamino en C₁-C₄, mono- ou di(alkyle en C₁-C₄)aminosulfonylamino, ou encore le radical - NHCONHQ, -NHCOQ ou -NHCO₂Q, où Q représente un groupe phényle, benzyle, (alkyle en C₁-C₄)Phényle ou alkyle en C₁-C₈, qui est éventuellement interrompu par un ou deux atomes d'oxygène en fonction éther,
R⁸ est un atome d'hydrogène, un groupe alkyle en C₁-C₄, en particulier méthyle, ou alcoxy en C₁-C₄, en particulier méthoxy ou éthoxy,
L⁴ et L⁵ représentent chacun indépendamment de l'autre un atome d'hydrogène, un groupe alkyle en C₁-C₈ qui est éventuellement substitué et peut être interrompu par un ou deux atomes d'oxygène en fonction éther, alcényle en C₃-C₄, cycloalkyle en C₅-C₇, phényle éventuellement substitué, ou encore, avec l'atome d'azote qui les relie, forment un radical hétérocyclique saturé à cinq ou six chaînons qui éventuellement contient encore d'autres hétéroatomes,
R⁹ est un atome d'hydrogène ou un groupe alkyle en C₁-C₄, en particulier méthyle,
R¹⁰ est un atome d'hydrogène, un groupe halogéno, alkyle en C₁-C₈, phényle éventuellement substitué, benzyle éventuellement substitué, cyclohexyle, thiényle, hydroxy, alcoxy en C₁-C₄, alkylthio en C₁-C₄ ou monoalkylamino en C₁-C₈, et
R¹¹ est un groupe cyano, carbamoyle, mono- ou di(alkyle en C₁-C₈)-Carbamoyle, (alcoxy en C₁-C₈)carbonyle, ou phényle éventuellement substitué,
R³ est un groupe cyano, carbamoyle, carboxyle ou (alcoxy en C₁-C₄)-carbonyle,
R⁴ est un atome d'oxygène ou un radical de formule C(CN)₂, C(CN)COOL¹ ou C(COOL¹)₂, où chaque L¹ est un groupe alkyle en C₁-C₈, qui est éventuellement interrompu par un ou deux atomes d'oxygène en fonction éther, ou encore le groupe phényle,
R⁵ est un atome d'hydrogène, un groupe alkyle en C₁-C₈ qui est éventuellement substitué et peut être interrompu par un ou deux atomes d'oxygène en fonction éther, ou phényle éventuellement substitué, et
R⁶ est un groupe alkyle en C₁-C₂₀, qui est éventuellement substitué et peut être interrompu par un à quatre atomes d'oxygène en fonction éther, phényle éventuellement substitué, hydroxy, ou un radical de formule NL²L³ dans laquelle L² et L³ représentent chacun indépendamment de l'autre un atome d'hydrogène, un groupe alkyle en C₁-C₁₂ éventuellement substitué, cycloalkyle en C₅-C₇, phényle éventuellement substitué, pyridyle éventuellement substitué, alcanoyle en C₁-C₁₂ éventuellement substitué, (alcoxy en C₁-C₁₂)carbonyle, alkylsulfonyle en C₁-C₁₂ éventuellement substitué, cycloalkylsulfonyle en C₅-C₇, phénylsulfonyle éventuellement substitué, pyridylsulfonyle éventuellement substitué, benzoyle éventuellement substitué, pyridylcarbonyle ou thiénylcarbonyle, ou encore L² et L³, avec l'atome d'azote qui les relie, représentent chacun un groupe succinimido éventuellement substitué par des substituants alkyle en C₁-C₄, phtalimido éventuellement substitué par des substituants alkyle en C₁-C₄, ou un radical hétérocyclique saturé à cinq ou six chaînons, qui contient éventuellement encore d'autres hétéroatomes,
et au moins un colorant de formule 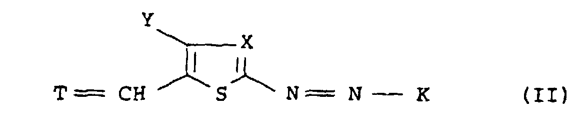 ou 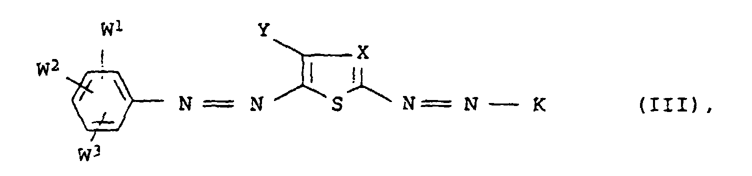 dans laquelle
T est un atome d'oxygène ou le résidu d'un composé CH-acide H₂T,
Y est un atome d'hydrogène, un groupe halogéno, alkyle en C₁-C₈ éventuellement substitué, qui peut être interrompu par un ou deux atomes d'oxygène en fonction éther, phényle éventuellement substitué, thiényle éventuellement substitué ou pyridyle éventuellement substitué,
X est un atome d'azote ou un radical de formule C-CN, C-CO-L¹, C-CO-N(L¹)₂ ou C-CO-OL¹, où chaque L¹ a les significations données ci-dessus,
K est le résidu d'un composant de copulation de la série de l'aniline ou du thiazole,
W¹ est un atome d'hydrogène, un groupe cyano, nitro, ou un radical de formule CO-L¹, SO₂-L¹, CO-N(L¹)₂, SO₂-N-(L¹)₂, CO-OL¹ ou SO₂-OL¹, où chaque L¹ a les significations données ci-dessus, et
W² et W³ représentent chacun indépendamment de l'autre un atome d'hydrogène, un groupe halogéno, trifluorométhyle, alkyle en C₁-C₄, alcoxy en C₁-C₄, ou un radical de formule N(L¹)₂, dans laquelle L¹ a les significations données ci-dessus.

2. Procédé selon la revendication 1, caractérisé en ce que R³ est le groupe cyano.

3. Procédé selon la revendication 1, caractérisé en ce que R⁴ est un atome d'oxygène.

4. Procédé selon la revendication 1, caractérisé en ce que R⁵ est le groupe méthyle.

5. Procédé selon la revendication 1, caractérisé en ce que R¹ et R⁶ représentent chacun indépendamment de l'autre un groupe alkyle en C₁-C₁₂, qui est éventuellement substitué par des substituants alcanoyloxy en C₁-C₆, (alcoxy en C₁-C₈)carbonyle, la chaîne alkyle de chacun d'entre eux pouvant être interrompue par un ou deux atomes d'oxygène en fonction éther, phényle ou (alkyle en C₁-C₄)phényle, et peut être interrompu par un ou deux atomes d'oxygène en fonction éther.

6. Procédé selon la revendication 1, caractérisé en ce que R² est un radical de formule IVa.

7. Procédé selon la revendication 1, caractérisé en ce qu'on transfère des mélanges de colorants qui contiennent au moins un colorant de pyridine de formule Ia, Ib ou Ic, ainsi qu'au moins un colorant azoïque de formule II.

8. Procédé selon la revendication 1, caractérisé en ce qu'on transfère des mélanges de colorants qui contiennent au moins un colorant de pyridine de formule Ia, Ib ou Ic, ainsi qu'au moins un colorant azoïque de formule III.

9. Procédé selon la revendication 1, caractérisé en ce que Y est un atome d'hydrogène ou le groupe chloro ou méthyle, et X est un radical de formule C-CN ou C-CO-OL¹, où L¹ est un groupe alkyle en C₁-C₆.
